# EUROPÄISCHE PATENTSCHRIFT

(11) **EP 2 924 399 B1**
(45) Veröffentlichungstag und Bekanntmachung des Hinweises auf die Patenterteilung: **13.05.2020**
(21) Anmeldenummer: 15000298.8
(22) Anmeldetag: 02.02.2015
(51) Int. Cl.: G01F 1/60, G01F 25/00

(54) **Magnetisch-induktives-Durchflussmessgerät und Verfahren zum Betreiben eines magnetisch-induktiven Durchflussmessgeräts**
Magnetic-inductive flow measuring apparatus and method for operating a magnetic-inductive flow measuring apparatus
Débitmètre à induction magnétique, et procédé de fonctionnement d'un débitmètre à induction magnétique

(30) Priorität: 24.03.2014 DE 102014004122
(43) Veröffentlichungstag der Anmeldung: 30.09.2015
(73) Patentinhaber: Krohne Messtechnik GmbH, 47058 Duisburg (DE)
(72) Erfinder: Florin, Wilhelm, 47198 Duisburg (DE)
(74) Vertreter: Gesthuysen Patent- und Rechtsanwälte

(56) Entgegenhaltungen:
- EP-A2- 1 249 687
- WO-A1-2012/066372
- DE-A1- 3 810 034
- Verificator Sitrans: "Durchflussmessgeräte SITRANS F", , 1 January 2010 (2010-01-01), XP055473475, Retrieved from the Internet: URL:https://www.automation.siemens.com/w1/ efiles/instrumentation/catalogs/fi01/fi01_ ge_extract/sitransf_fmverificator_fi01ge.p df [retrieved on 2018-05-08]

## Beschreibung

Die Erfindung betrifft ein Verfahren zum Betreiben eines magnetisch-induktiven Durchflussmessgeräts mit mindestens einem Messrohr für den Durchfluss eines elektrisch leitenden Mediums, mit einer Magnetfelderzeugungseinrichtung zur Erzeugung eines zumindest auch senkrecht zur Längsachse des Messrohrs verlaufenden wechselnden Magnetfeldes, mit mindestens zweiinsbesondere das Medium berührenden - Messelektroden und mit einem Messelektrodenkreis, zu dem die Messelektroden gehören, und mit einer Auswerteschaltung, wobei die Magnetfelderzeugungseinrichtung mindestens eine Feldspule und eine Spulenstromversorgung aufweist und die Spulenstromversorgung vorzugsweise einen Stromregler und vorzugsweise eine Umschaltbrücke aufweist.

Aus der DE 199 07 864 A1 ist ein magnetisch-induktives Durchflussmessgerät der zuvor beschriebenen Art bekannt. Bei diesem bekannten magnetischinduktiven Durchflussmessgerät kann die Magnetfelderzeugungseinrichtung eine Feldspule oder zwei Feldspulen aufweisen. Das ist der Grund dafür, dass zuvor ausgeführt ist, dass die Magnetfelderzeugungseinrichtung mindestens eine Feldspule aufweist. Auch weist bei dem bekannten magnetisch-induktiven Durchflussmessgerät die Magnetfelderzeugungseinrichtung einen Stromregler und eine Umschaltbrücke auf. Weil jedoch weder ein Stromregler noch eine Umschaltbrücke funktionsnotwendig sind, ist weiter oben ausgeführt, dass die Magnetfelderzeugungseinrichtung vorzugsweise einen Stromregler und vorzugsweise eine Umschaltbrücke aufweist.

Magnetisch-induktive Durchflussmessgeräte sind seit Jahrzehnten umfangreich im Stand der Technik bekannt. Dazu wird exemplarisch auf die Literaturstelle "Technische Durchflussmessung" von Prof. Dr.-Ing. K.W. Bonfig, 3. Auflage, Vulkan-Verlag Essen, 2002, Seiten 123 bis 167, und auch auf die Literaturstelle "Grundlagen Magnetisch-Induktive Durchflussmessung" von Dipl.-Ing. Friedrich Hoffmann, 3. Auflage, 2003, Druckschrift der Firma KROHNE Messtechnik GmbH & Co. KG, verwiesen.

Das grundlegende Prinzip eines magnetisch-induktiven Durchflussmessgeräts zur Durchflussmessung eines strömenden Mediums geht auf Michael Faraday zurück, der bereits im Jahre 1832 vorgeschlagen hat, das Prinzip der elektromagnetischen Induktion zur Messung der Strömungsgeschwindigkeit eines elektrisch leitfähigen Mediums anzuwenden.

Nach dem faradayschen Induktionsgesetz entsteht in einem von einem Magnetfeld durchsetzten strömenden, elektrisch leitfähigen Medium eine elektrische Feldstärke senkrecht zur Strömungsrichtung des Mediums und senkrecht zum Magnetfeld. Das faradaysche Induktionsgesetz wird bei magnetisch-induktiven Durchflussmessgeräten dadurch ausgenutzt, dass mittels einer Magnetfelderzeugungseinrichtung, die mindestens eine Feldspule, üblicherweise zwei Feldspulen aufweist, ein während des Messvorgangs sich zeitlich veränderndes Magnetfeld erzeugt wird und das Magnetfeld wenigstens teilweise das durch ein Messrohr strömende elektrisch leitfähige Medium durchsetzt. Dabei weist das erzeugte Magnetfeld wenigstens eine Komponente senkrecht zur Längsachse des Messrohrs bzw. senkrecht zur Strömungsrichtung des Mediums auf.

Wenn es einleitend heißt, dass zu dem in Rede stehenden magnetisch-induktiven Durchflussmessgerät mindestens eine Magnetfelderzeugungseinrichtung "zur Erzeugung eines zumindest auch senkrecht zur Längsachse des Messrohrs verlaufenden Magnetfeldes" gehört, dann sei hier noch einmal darauf hingewiesen, dass das Magnetfeld zwar vorzugsweise senkrecht zur Längsachse des Messrohrs bzw. senkrecht zur Strömungsrichtung des Mediums verläuft, ausreichend jedoch ist, dass eine Komponente des Magnetfeldes senkrecht zur Längsachse des Messrohrs bzw. senkrecht zur Strömungsrichtung des Mediums verläuft.

Eingangs ist auch ausgeführt, dass zu dem in Rede stehenden magnetisch-induktiven Durchflussmessgerät mindestens zwei - insbesondere das Medium berührende - Messelektroden gehören. Diese Messelektroden dienen zum Abgreifen einer in dem strömenden Medium induzierten Messspannung. Vorzugsweise verläuft die virtuelle Verbindungslinie der beiden Messelektroden zumindest im Wesentlichen senkrecht zur Richtung des das Messrohr senkrecht zur Längsachse des Messrohrs durchsetzenden Magnetfeldes, insbesondere können die Messelektroden so vorgesehen sein, dass deren virtuelle Verbindungslinie tatsächlich - mehr oder weniger - senkrecht zur Richtung des das Magnetfeld durchsetzenden Magnetfeldes verläuft.

Schließlich ist eingangs ausgeführt, dass es sich bei den Messelektroden insbesondere um solche handeln kann, die das Medium berühren. Tatsächlich kann selbstverständlich die durch Induktion im strömenden, elektrisch leitfähigen Medium erzeugte elektrische Feldstärke durch direkt, also galvanisch mit dem Medium in Kontakt stehende Messelektroden als Messspannung abgegriffen werden. Es gibt aber auch magnetisch-induktive Durchflussmessgeräte, bei denen die Messspannung nicht durch direkt, also nicht durch galvanisch mit dem Medium in Kontakt stehende Messelektroden abgegriffen wird, vielmehr die Messspannung kapazitiv erfasst wird.

Magnetisch-induktive Durchflussmessgeräte sind im industriellen Bereich anfangs mit einem magnetischen Wechselfeld betrieben worden. Aus Kostengründen ist dabei die Feldspule bzw. sind die Feldspulen an das vorhandene Wechselspannungsnetz angeschlossen worden, so dass das Magnetfeld im Wesentlichen sinusförmig seine Feldstärke ändert. Das Betreiben von magnetisch-induktiven Durchflussmessgeräten mit einem Magnetfeld, das seine Feldstärke im Wesentlichen sinusförmig ändert, hat jedoch Nachteile (siehe die DE 199 07 864 A1, Spalte 1, Zeile 53, bis Spalte 2, Zeile 13).

Seit Mitte der 70er Jahre haben sich zunehmend magnetisch-induktive Durchflussmessgeräte durchgesetzt, die mit einem geschalteten magnetischen Gleichfeld arbeiten, bei denen also mit einem geschalteten Gleichstrom als Spulenstrom gearbeitet wird. Wird mit einem geschalteten magnetischen Gleichfeld gearbeitet, sind Nachteile vermieden, die dann auftreten, wenn mit einem Magnetfeld gearbeitet wird, dessen Feldstärke sich im Wesentlichen sinusförmig ändert. Es gibt jedoch auch Probleme, wenn mit einem geschalteten magnetischen Gleichfeld gearbeitet wird (vgl. dazu die DE 199 07 864 A1, Spalte 2, Zeilen 18 bis 41).

Der Erfindung, die in der DE 199 07 864 A1 beschrieben ist, lag die Aufgabe zugrunde, das bekannte, mit einem geschalteten magnetischen Gleichfeld arbeitende magnetisch-induktive Durchflussmessgerät so auszugestalten und weiterzubilden, dass die erläuterten, systembedingten Umschaltphasen kürzer sind als bei den zuvor im Stand der Technik bekannt gewesenen magnetisch-induktiven Durchflussmessgeräten, so dass die Feldfrequenz, also die Frequenz, mit der das magnetische Gleichfeld umgeschaltet wird, erhöht werden kann (vgl. die DE 199 07 864 A1, Spalte 2, Zeilen 42 bis 49).

Im Einzelnen ist bei dem bekannten magnetisch-induktiven Durchflussmessgerät eine Zusatzstromquelle vorgesehen und ist mittels der Zusatzstromquelle unmittelbar zu Beginn einer jeden Halbwelle des als geschalteter Gleichstrom vorliegenden Spulenstroms ein Zusatzstrom in die Feldspule bzw. in die Feldspulen einspeisbar (vgl. die DE 199 07 864 A1, Spalte 2, Zeilen 50 bis 57, den Patentanspruch 1, aber auch die weitere Erläuterung in Spalte 2, Zeile 58, bis Spalte 4, Zeile 7, und die Patentansprüche 2 bis 10).

Auch aus der DE 3810034 A1 ist ein magnetisch-induktives Durchflussmessgerät bekannt. Mit dem Durchflussmessgerät kann eine Leer-Rohrdetektion durchgeführt werden oder ein Überlaufen des Messrohres festgestellt werden.

Magnetisch-induktive Durchflussmessgeräte der in Rede stehenden Art bestehen gleichsam aus zwei Funktionseinheiten. Dabei gehören zu der ersten Funktionseinheit, auch mit Sensor bezeichnet, das Messrohr, die Feldspule oder die Feldspulen der Magnetfelderzeugungseinrichtung und die Messelektroden. Zur zweiten Funktionseinheit, auch mit Elektronik bezeichnet, gehören die Spulenstromversorgung und die Auswerteschaltung. Üblicherweise sind die Spulenstromversorgung und die Auswerteschaltung auf einer Leiterkarte oder auf mehreren Leiterkarten realisiert. Die erste Funktionseinheit, also der Sensor, ist meistens über ein Kabel mit der zweiten Funktionseinheit, also der Elektronik, verbunden. Bei magnetisch-induktiven Durchflussmessgeräten, bei denen die Elektronik mehr oder weniger unmittelbar auf dem Sensor angeordnet ist, Kompaktversionen, sind die Kabel recht kurz. Es gibt aber auch Ausführungsformen, bei denen der Sensor einerseits und die Elektronik andererseits getrennt sind, Remoteversionen. Dabei können unter Umständen recht lange Kabel, mit einer Länge von bis zu 100 m, zwischen dem Sensor und der Elektronik notwendig sein.

Seit langem besteht bei sicherheitsrelevanten Applikationen von magnetischinduktiven Durchflussmessgeräten, wie auch bei sicherheitsrelevanten Applikationen anderer Durchflussmessgeräte, der Wunsch, häufig auch die Notwendigkeit, die Funktionsfähigkeit des Durchflussmessgeräts vollständig zu überwachen. Das ist bis heute bei magnetisch-induktiven Durchflussmessgeräten nur bedingt möglich.

Den Feldspulenkreis, Stromkreis, zu dem die Feldspule bzw. die Feldspulen und die Spulenstromversorgung gehören, kann man von der Elektronik sowohl auf Unterbrechung als auch auf Kurzschluss überwachen. Den Messelektrodenkreis, Stromkreis, zu dem die Messelektroden gehören, kann man auf eine typische Impedanz in bestimmten Bereichen überwachen. Fließt durch ein magnetisch-induktives Durchflussmessgerät der in Rede stehenden Art ein elektrisch leitendes Medium, dann kann man durch Modulation des Spulenstromes sowohl den Feldspulenkreis als auch den Messelektrodenkreis überwachen, nämlich dadurch, dass man die aus einer Modulation des Spulenstromes resultierenden Signale auswertet. Das geht dann jedoch nicht, wenn durch das magnetisch-induktive Durchflussmessgerät kein elektrisch leitendes Medium strömt, wenn also der Durchfluss Null ist.

Ausgehend von dem zuvor erläuterten Stand der Technik und dem aufgezeigten Problem liegt der Erfindung die Aufgabe zugrunde, ein Verfahren zum Betreiben eines magnetisch-induktiven Durchflussmessgeräts anzugeben, mit dem auch dann eine vollständige Überwachung des Durchflussmessgeräts möglich ist, wenn kein elektrisch leitendes Medium durch das Messrohr fließt, also bei Durchfluss Null.

Das magnetisch-induktive Durchflussmessgerät ist dadurch gekennzeichnet, dass die Auswerteschaltung einen beim Betriebszustand "kein Durchfluss" aktiven Übersprechspannungsindikator aufweist.

Bei magnetisch-induktiven Durchflussmessgeräten muss die Feldspule bzw. müssen die Feldspulen zunächst, für das kurzzeitige Einschwingen des Spulenstromes, mit einer relativ hohen Spulenspannung, danach mit einem relativ hohen Spulenstrom betrieben werden. Dies und die Tatsache, dass die Feldspule bzw. die Feldspulen funktionsnotwendig in der Nähe der Messelektroden angebracht sind, führt dazu, dass insbesondere während der Umschaltphasen ein "Übersprechen" stattfindet, das heißt, dass Übersprechspannungen auf die Messelektroden übertragen werden. Dieses Übersprechen versucht man normalerweise durch den Aufbau des Sensors, durch Abschirmungen und durch eine geschickte Führung der Verbindung zwischen dem Sensor und der Elektronik zu minimieren, da das Übersprechen die normale Durchflussmessung stören kann.

Das, was man normalerweise versucht zu eliminieren bzw. jedenfalls zu reduzieren, wird nun ausgenutzt, indem die - normalerweise unerwünschte - Übersprechspannung gemessen und überwacht wird, wodurch man ein Indiz für einen geschlossenen und funktionierenden Messelektrodenkreis hat.

Die maximale Amplitude der Übersprechspannung ist in der Regel relativ gering. Folglich empfiehlt es sich, für die Messung der Übersprechspannung einen empfindlichen Signal- A/D-Wandler zu verwenden.

Soll erst dann, wenn die Amplitude der Übersprechspannung einen bestimmten Wert überschreitet, der Messelektrodenkreis als funktionsfähig bewertet werden, empfiehlt es sich, in der Auswerteschaltung des magnetisch-induktiven Durchflussmessgeräts einen eine bestimmte Übersprechspannung als Referenzwert abspeichernden Referenzwertgeber vorzusehen. Insbesondere kann die Signalform-Amplitude der Übersprechspannung als Referenzwert abgespeichert werden.

Das Verfahren zum Betreiben eines magnetisch-induktiven Durchflussmessgerätes ist erfindungsgemäß zunächst und im Wesentlichen dadurch gekennzeichnet, dass dann, wenn kein elektrisch leitendes Medium durch das Messrohr strömt, die Übersprechspannung gemessen und/oder überwacht wird und aus der Übersprechspannung abgeleitet wird, ob der Messelektrodenkreis funktionsfähig ist. Dazu, was mit Übersprechen und mit Übersprechspannung gemeint ist, wird auf die weiter oben gegebene Erläuterung verwiesen.

Da die maximale Amplitude der Übersprechspannung in der Regel relativ gering ist, empfiehlt es sich, die Übersprechspannung mit Hilfe eines empfindlichen Signal-A/D-Wandlers zu messen und/oder zu überwachen.

Bei magnetisch-induktiven Durchflussmessgeräten der in Rede stehenden Art gibt es praktisch immer ein Übersprechen und liegt immer eine Übersprechspannung vor. Es kann aber zweckmäßig sein, nicht jede noch so kleine Amplitude der Übersprechspannung als Indikator dafür zu verwenden, dass der Messelektrodenkreis funktionsfähig ist. Folglich geht eine weitere Lehre der Erfindung dahin, die gemessene und/oder überwachte Übersprechspannung mit einem gespeicherten Referenzwert zu vergleichen und nur dann, wenn die gemessene und/oder überwachte Übersprechspannung oberhalb des Referenzwertes liegt, den Messelektrodenkreis als funktionsfähig zu bewerten. Dabei empfiehlt es sich, die Signalform-Amplitude der Übersprechspannung als Referenzwert heranzuziehen.

Schließlich geht eine weitere Lehre der Erfindung dahin, die Ansteuerung des Feldstromes zu verändern beziehungsweise zu modulieren. Das macht die Signalform der Übersprechspannung besser erkennbar.

Die Erfindung wird in den Ansprüchen 1 bis 8 definiert.

In der Zeichnung zeigen
- Fig. 1: relativ schematisch, den grundsätzlichen Aufbau eines magnetisch-induktiven Durchflussmessgeräts,
- Fig. 2: einen möglichen Verlauf des Feldstromes eines magnetisch-induktiven Durchflussmessgeräts und
- Fig. 3: eine zu dem Verlauf des Feldstromes nach Fig. 2 gehörende Darstellung eines möglichen Verlaufs der Übersprechspannung.

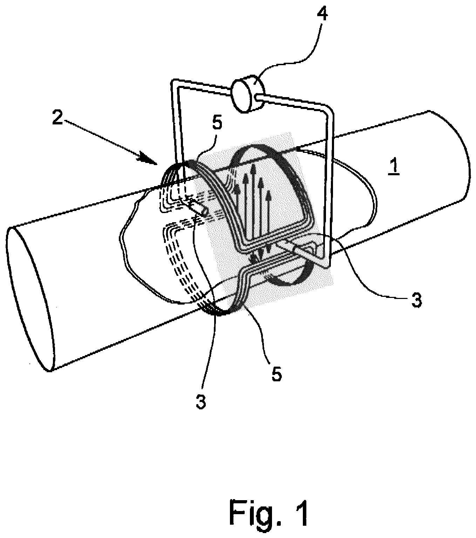

Es geht um magnetisch-induktive Durchflussmessgeräte. Zu solchen Durchflussmessgeräten gehören jeweils mindestens ein Messrohr 1 für den Durchfluss eines elektrisch leitenden Mediums; ein solches Messrohr 1 ist nur in der Fig. 1 dargestellt, und auch nur schematisch. Zu magnetisch-induktiven Durchflussmessgeräten gehört dann eine Magnetfelderzeugungseinrichtung 2 zur Erzeugung eines zumindest auch senkrecht zur Längsachse des Messrohrs 1 verlaufenden wechselnden Magnetfeldes, zwei - insbesondere das Medium berührende - Messelektroden 3 und eine nur sehr schematisch angedeutete Auswerteschaltung 4. Im dargestellten Ausführungsbeispiel weist die Magnetfelderzeugungseinrichtung 2 zwei Feldspulen 5 und eine nicht dargestellte Spulenstromversorgung auf.

Die nur angedeutete Auswerteschaltung 4 weist einen beim Betriebszustand "kein Durchfluss" aktiven, nicht dargestellten Übersprechspannungsindikator auf, der einen nicht dargestellten empfindlichen Signal-A/D-Wandler aufweist. Die - nur sehr schematisch angedeutete - Auswerteschaltung 4 kann im Übrigen auch einen eine bestimmte Übersprechspannung als Referenzspannung abspeichernden, wiederum nicht dargestellten Referenzgeber aufweisen.

Das zuvor nur in seinem grundsätzlichen Aufbau beschriebene magnetisch-induktive Durchflussmessgerät wird erfindungsgemäß zunächst und im Wesentlichen so betrieben, dass dann, wenn kein elektrisch leitendes Medium durch das Messrohr 1 strömt, die Übersprechspannung gemessen und/oder überwacht wird und aus der Übersprechspannung abgeleitet wird, ob der Messelektrodenkreis, also der Stromkreis, zu dem die Messelektroden 3 gehören, funktionsfähig ist. Vorzugsweise wird die Übersprechspannung mit Hilfe eines empfindlichen Signal-A/D-Wandlers gemessen und/oder überwacht.

Grundsätzlich liegt bei magnetisch-induktiven Durchflussmessgeräten der in Rede stehenden Art stets eine Übersprechspannung vor. Soll jedoch erst dann, wenn die Amplitude der Übersprechspannung einen bestimmten Wert überschreitet, der Messelektrodenkreis als funktionsfähig bewertet werden, empfiehlt es sich, die gemessene und/oder überwachte Übersprechspannung mit einem gespeicherten Referenzwert zu vergleichen und nur dann, wenn die gemessene und/oder überwachte Übersprechspannung oberhalb des Referenzwertes liegt, den Messelektrodenkreis als funktionsfähig zu bewerten.

Insbesondere kann die Signalform-Amplitude der Übersprechspannung als Referenzwert herangezogen werden.

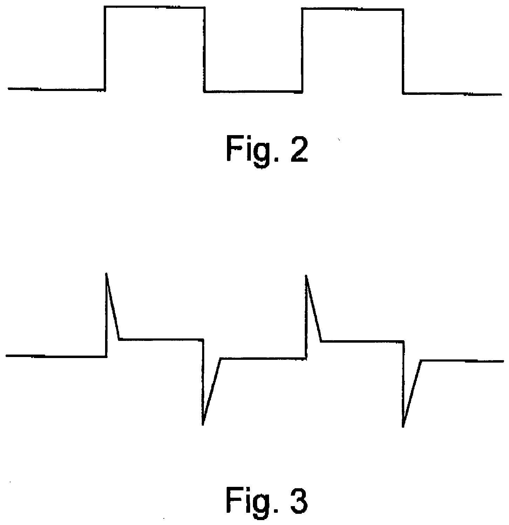

Die Fig. 2 zeigt einen möglichen Verlauf des Feldstromes, und die Fig. 3 zeigt einen zu dem Verlauf des Feldstroms nach Fig. 2 möglichen Verlauf der Übersprechspannung.

## Patentansprüche

1. Magnetisch-induktives Durchflussmessgerät, mit mindestens einem Messrohr (1) für den Durchfluss eines elektrisch leitenden Mediums, mit einer Magnetfelderzeugungseinrichtung (2) zur Erzeugung eines zumindest auch senkrecht zur Längsachse des Messrohres verlaufenden wechselnden Magnetfeldes, mit mindestens zwei - insbesondere das Medium berührenden - Messelektroden (3), mit einem Messelektrodenkreis, zu dem die Messelektroden (3) gehören, und mit einer Auswerteschaltung (4), wobei die Magnetfelderzeugungseinrichtung (2) mindestens eine Feldspule (5) und eine Spulenstromversorgung aufweist,
**dadurch gekennzeichnet,**
**dass** die Auswerteschaltung (4) einen beim Betriebszustand "kein Durchfluss" aktiven Übersprechspannungsindikator aufweist und die Auswerteschaltung (4) ausgebildet ist, aus der Übersprechspannung abzuleiten, ob der Messelektrodenkreis funktionsfähig ist.

2. Magnetisch-induktives Durchflussmessgerät nach Anspruch 1, **dadurch gekennzeichnet, dass** der Übersprechspannungsindikator einen empfindlichen Signal-A/D-Wandler aufweist.

3. Magnetisch-induktives Durchflussmessgerät nach Anspruch 1 oder 2, **dadurch gekennzeichnet, dass** die Auswerteschaltung (4) einen eine bestimmte Übersprechspannung als Referenzwert abspeichernden Referenzwertgeber aufweist.

4. Verfahren zum Betreiben eines magnetisch-induktiven Durchflussmessgeräts mit mindestens einem Messrohr (1) für den Durchfluss eines elektrisch leitenden Mediums, mit einer Magnetfelderzeugungseinrichtung (2) zur Erzeugung eines zumindest auch senkrecht zur Längsachse des Messrohrs (1) verlaufenden wechselnden Magnetfeldes, mit mindestens zwei - insbesondere das Medium berührenden - Messelektroden (3) und mit einem Messelektrodenkreis, zu dem die Messelektroden gehören, und mit einer Auswerteschaltung (4), wobei die Magnetfelderzeugungseinrichtung (2) mindestens eine Feldspule (5) und eine Spulenstromversorgung aufweist und die Spulenstromversorgung vorzugsweise einen Stromregler und vorzugsweise eine Umschaltbrücke aufweist,
**dadurch gekennzeichnet,**
**dass** dann, wenn kein elektrisch leitendes Medium durch das Messrohr strömt, die Übersprechspannung gemessen und/oder überwacht wird und aus der Übersprechspannung abgeleitet wird, ob der Messelektrodenkreis funktionsfähig ist.

5. Verfahren nach Anspruch 4, **dadurch gekennzeichnet, dass** die Übersprechspannung mit Hilfe eines empfindlichen Signal-A/D-Wandlers gemessen und/oder überwacht wird.

6. Verfahren nach Anspruch 4 oder 5, **dadurch gekennzeichnet, dass** die gemessene und/oder überwachte Übersprechspannung mit einem gespeicherten Referenzwert verglichen wird und nur dann, wenn die gemessene und/oder überwachte Übersprechspannung oberhalb des Referenzwertes liegt, der Messelektrodenkreis als funktionsfähig bewertet wird.

7. Verfahren nach Anspruch 6, **dadurch gekennzeichnet, dass** die Signalform-Amplitude der Übersprechspannung als Referenzwert herangezogen wird.

8. Verfahren nach einem der Ansprüche 4 bis 7, **dadurch gekennzeichnet, dass** die Ansteuerung des Feldstroms verändert bzw. moduliert wird.

## Claims

1. Magnetic-inductive flowmeter, with at least one measuring tube (1) for the flow of an electrically conductive medium, with a magnetic field generator (2) for generating an alternating magnetic field which is at least also perpendicular to the longitudinal axis of the measuring tube, with at least two measuring electrodes (3) - in particular in contact with the medium -, with a measuring electrode circuit to which the measuring electrodes (3) belong, and with an evaluation circuit (4), wherein the magnetic field generator (2) has at least one field coil (5) and a coil power supply,
**characterized in**
**that** the evaluation circuit (4) has a crosstalk voltage indicator which is active in the "no flow" operating state, and the evaluation circuit (4) is designed to derive whether the measuring electrode circuit is functional from the cross-talk voltage.

2. Magnetic-inductive flowmeter according to claim 1, **characterized in that** the crosstalk voltage indicator has a sensitive signal A/D converter.

3. Magnetic-inductive flow meter according to claim 1 or 2, **characterized in that** the evaluation circuit (4) has a reference value indicator storing a specific crosstalk voltage as a reference value.

4. Method for operating a magnetic-inductive flowmeter with at least one measuring tube (1) for the flow of an electrically conductive medium, with a magnetic field generator (2) for generating an alternating magnetic field which is at least also perpendicular to the longitudinal axis of the measuring tube (1), with at least two measuring electrodes (3) - in particular in contact with the medium - and with a measuring electrode circuit, to which the measuring electrodes belong, and with an evaluation circuit (4), wherein the magnetic field generator (2) has at least one field coil (5) and a coil power supply and the coil power supply preferably has a current regulator and preferably a switching bridge,
**characterized in**
**that**, if no electrically conductive medium flows through the measuring tube, the crosstalk voltage is measured and/or monitored and whether the measuring electrode circuit is functional is derived from the crosstalk voltage.

5. Method according to claim 4, **characterized in that** the crosstalk voltage is measured and/or monitored by means of a sensitive signal A/D converter.

6. Method according to claim 4 or 5, **characterized in that** the measured and/or monitored crosstalk voltage is compared with a stored reference value and only if the measured and/or monitored crosstalk voltage is above the reference value is the measuring electrode circuit evaluated as functional.

7. Method according to claim 6, **characterized in that** the signal shape amplitude of the crosstalk voltage is used as a reference value.

8. Method according to any one of claims 4 to 7, **characterized in that** the control of the field current is changed or modulated.

## Revendications

1. Débitmètre magnéto-inductif, comprenant au moins un tube de mesure (1) pour le débit d'un fluide électriquement conducteur, comprenant un dispositif de génération de champ magnétique (2) destiné à générer un champ magnétique alterné qui s'étend également perpendiculairement par rapport à l'axe longitudinal du tube de mesure, comprenant au moins deux électrodes de mesure (3), notamment en contact avec le fluide, comprenant un circuit d'électrodes de mesure auquel appartiennent les électrodes de mesure (3), et comprenant un circuit d'interprétation (4), le dispositif de génération de champ magnétique (2) possédant au moins une bobine de champ (5) et une alimentation électrique de bobine,
**caractérisé en ce que**
le circuit d'interprétation (4) possède un indicateur de tension de diaphonie actif à l'état opérationnel « absence de débit » et le circuit d'interprétation (4) est configuré pour déduire, à partir de l'indicateur de tension de diaphonie, si le circuit d'électrodes de mesure est fonctionnel.

2. Débitmètre magnéto-inductif selon la revendication 1, **caractérisé en ce que** l'indicateur de tension de diaphonie possède un convertisseur A/N de signal sensible.

3. Débitmètre magnéto-inductif selon la revendication 1 ou 2, **caractérisé en ce que** le circuit d'interprétation (4) possède un transmetteur de valeur de référence qui mémorise une tension de diaphonie donnée en tant que valeur de référence.

4. Procédé pour faire fonctionner un débitmètre magnéto-inductif, comprenant au moins un tube de mesure (1) pour le débit d'un fluide électriquement conducteur, comprenant un dispositif de génération de champ magnétique (2) destiné à générer un champ magnétique alterné qui s'étend également perpendiculairement par rapport à l'axe longitudinal du tube de mesure (1), comprenant au moins deux électrodes de mesure (3), notamment en contact avec le fluide et comprenant un circuit d'électrodes de mesure auquel appartiennent les électrodes de mesure, et comprenant un circuit d'interprétation (4), le dispositif de génération de champ magnétique (2) possédant au moins une bobine de champ (5) et une alimentation électrique de bobine et l'alimentation électrique de bobine possédant de préférence un régulateur de courant et de préférence un pont de permutation,
**caractérisé en ce que**
lorsqu'il n'y a aucun écoulement de fluide électriquement conducteur à travers le tube de mesure, la tension de diaphonie est mesurée et/ou surveillée et le caractère fonctionnel du circuit d'électrodes de mesure est déduit à partir de la tension de diaphonie.

5. Procédé selon la revendication 4, **caractérisé en ce que** la tension de diaphonie est mesurée et/ou surveillée à l'aide d'un convertisseur A/N de signal sensible.

6. Procédé selon la revendication 4 ou 5, **caractérisé en ce que** la tension de diaphonie mesurée et/ou surveillée est comparée à une valeur de référence et le circuit d'électrodes de mesure n'est évalué fonctionnel que si la tension de diaphonie mesurée et/ou surveillée est supérieure à la valeur de référence.

7. Procédé selon la revendication 6, **caractérisé en ce que** l'amplitude de la forme de signal de la tension de diaphonie est utilisée comme valeur de référence.

8. Procédé selon l'une des revendications 4 à 7, **caractérisé en ce que** la commande du courant de champ est modifiée ou modulée.
